# EUROPÄISCHE PATENTSCHRIFT

(11) **EP 3 516 264 B1**
(45) Veröffentlichungstag und Bekanntmachung des Hinweises auf die Patenterteilung: **08.07.2020**
(21) Anmeldenummer: 17761255.3
(22) Anmeldetag: 04.09.2017
(51) Int. Cl.: F16H 47/08, F16H 61/70

(54) **VERFAHREN ZUM SCHALTEN EINES AUTOMATGETRIEBES**
METHOD FOR SHIFTING AN AUTOMATIC TRANSMISSION
PROCÉDÉ DE CHANGEMENT DE RAPPORT D'UNE BOÎTE DE VITESSES AUTOMATIQUE

(30) Priorität: 21.09.2016 DE 102016218114
(43) Veröffentlichungstag der Anmeldung: 31.07.2019
(73) Patentinhaber: Voith Patent GmbH, 89522 Heidenheim (DE)
(72) Erfinder: BUSCH DR., Jörg, 89551 Königsbronn-Zang (DE)
(74) Vertreter: Voith Patent GmbH - Patentabteilung
(86) Internationale Anmeldenummer: PCT/EP2017/072041
(87) Internationale Veröffentlichungsnummer: WO 2018/054666

(56) Entgegenhaltungen:
- EP-A1- 2 162 643
- DE-A1-102006 013 180
- DE-A1-102008 023 784
- US-A- 5 156 577
- US-A- 5 299 985

## Beschreibung

Die Erfindung betrifft ein Verfahren zum Schalten eines Automatgetriebes, wobei das Automatgetriebe verschiedene Kraftwege und einen hydrodynamischen Wandler aufweist, sodass Antriebsleistung von einer Getriebeeingangswelle zu einer Getriebeausgangswelle in einem ersten Gang hydrodynamisch, insbesondere kombiniert hydrodynamisch und mechanisch übertragen werden kann, und in einem anderen Gang oder in anderen Gängen ausschließlich mechanisch. Insbesondere ist das Getriebe wie das in der europäischen Patentschrift EP 2 162 643 B1 dargestellte gattungsgemäße Getriebe ausgeführt.

Beim gattungsgemäßen Getriebe wird in einem ersten Gang eine kombinierte hydrodynamische und mechanische Kraftübertragung von einer Getriebeeingangswelle zu einer Getriebeausgangswelle eingestellt. Hierfür sind ein hydrodynamischer Leistungszweig durch den hydrodynamischen Wandler und ein parallel hierzu vorgesehener rein mechanischer Leistungszweig um den Wandler herum vorgesehen, wobei die Antriebsleistungsübertragung gleichzeitig und parallel über diese beiden Leistungszweige erfolgt. Zum Ausbilden weiterer Gänge erfolgt die Leistungsübertragung von der Getriebeeingangswelle zur Getriebeausgangswelle ausschließlich mechanisch über den rein mechanischen Leistungszweig am hydrodynamischen Wandler vorbei.

Beim gattungsgemäßen Getriebe wird bereits vorgeschlagen, die herkömmliche Gangstufenzahl, die durch den kombinierten hydrodynamischen mechanischen Gang als Gang 1 und drei rein mechanische Gänge, die durch Einstellen verschiedener Übersetzungsverhältnisse in einem Antriebsbereich des hydrodynamischen Getriebes vor dem hydrodynamischen Wandler geschaltet werden, um einen fünften Gang zu ergänzen, dadurch, dass ausgehend vom vierten Gang mit einem Planetensatz im Abtriebsbereich des Getriebes die über den rein mechanischen Leistungszweig übertragene Drehbewegung ins Schnelle übersetzt wird. Im kombinierten hydrodynamischen mechanischen Gang hingegen wird der Planetensatz als Summiergetriebe betrieben, um die über den hydrodynamischen Leistungszweig und den rein mechanischen Leistungszweig übertragenen Antriebsleistungsanteile zu vereinen und die vereinte Leistung der Getriebeausgangswelle zuzuführen.

Der vorliegenden Erfindung liegt die Aufgabe zugrunde, ausgehend vom dargestellten Schaltverfahren eines Automatgetriebes die Schaltung derart zu verbessern, dass bei Verwendung des Getriebes in einem Kraftfahrzeugantriebsstrang zwischen einem Antriebsmotor und den Antriebsrädern eine energetisch günstigere Fahrweise des Kraftfahrzeugs, insbesondere ein niedrigerer Kraftstoffverbrauch des Kraftfahrzeugs, möglich ist.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben.

Ein erfindungsgemäßes Verfahren sieht vor, dass zum Schalten eines Automatgetriebes, das einen Antriebsbereich, einen hydrodynamischen Wandler und einen Abtriebsbereich aufweist, wobei im Abtriebsbereich genau ein Planetensatz vorgesehen ist, der einerseits in einem ersten Betriebszustand als Summiergetriebe für eine gleichzeitige parallele Antriebsleistungsübertragung in einem hydrodynamischen Leistungszweig über den hydrodynamischen Wandler und einem rein mechanischen Leistungszweig um den hydrodynamischen Wandler herum wirkt und andererseits in einem zweiten Betriebszustand eine über den rein mechanischen Leistungszweig übertragene Drehbewegung ins Schnelle übersetzt, im rein mechanischen Leistungszweig durch Öffnen und Schließen von Kupplungen und/oder Bremsen, insbesondere in Lamellenbauart, wobei die Kupplungen und/oder Bremsen im Antriebsbereich positioniert sind, verschiedene Übersetzungsverhältnisse eingestellt werden, um verschiedene Gänge des Automatgetriebes zu schalten.

Erfindungsgemäß wird mit dem Planetensatz im Abtriebsbereich bei wenigstens zwei verschiedenen Übersetzungsverhältnissen im rein mechanischen Leistungszweig, das heißt in zwei verschiedenen mechanischen Gängen des Automatgetriebes, die über den rein mechanischen Leistungszweig übertragene Drehbewegung jeweils ins Schnelle übersetzt, um jeweils einen Zusatzgang zu den genannten verschiedenen Gängen einzustellen.

Gemäß der Erfindung ist es somit nicht nur wie beim dargestellten Stand der Technik möglich, einen fünften Gang zusätzlich zu dem vormals höchsten, nämlich den vierten Gang zur Verfügung zu stellen, wobei beim fünften Gang die Abtriebswelle des Getriebes im Vergleich zum vierten Gang durch die Übersetzung ins Schnelle in dem Planetensatz im Abtriebsbereich schneller umläuft, sondern eine entsprechende Übersetzung ins Schnelle, damit die Abtriebswelle des Getriebes schneller umläuft, kann auch in kleineren Gängen verwendet werden, beispielsweise dem zweiten und/oder dem dritten Gang, also nicht nur im höchsten Gang. Damit können Zusatzgänge in Form von Zwischengängen geschaffen werden, wobei insbesondere die Übersetzungen der verschiedenen Gänge so gewählt werden, dass es keine Überschneidung zwischen den "ganzen" Gängen, das heißt den Gängen ohne Übersetzung ins Schnelle in dem Planetensatz im Abtriebsbereich und den Zwischengängen, das heißt mit Übersetzung ins Schnelle in dem Planetensatz im Abtriebsbereich gibt.

Die Schaltung im Planetensatz, um die Übersetzung ins Schnelle wahlweise einzustellen, kann beispielsweise über eine Kupplung, alternativ jedoch auch über eine Bremse erfolgen. Kupplung und/oder Bremse können in Lamellenbauart ausgeführt sein. Insbesondere wird jedoch eine Klauenkupplung verwendet.

Bevorzugt ist vorgesehen, dass mit dem Planetensatz im Abtriebsbereich bei allen verschiedenen Übersetzungsverhältnissen im rein mechanischen Leistungszweig die über den rein mechanischen Leistungszweig übertragene Drehbewegung zur Einstellung von Zusatzgängen jeweils ins Schnelle übersetzt wird.

Durch die Erhöhung der Anzahl von möglichen Gängen kann mit einer vorausschauenden Schaltlogik, die beispielsweise die Signale eines Satellitensystems, beispielsweise GPS, nutzt, die Einstellung des jeweiligen der aktuellen und künftigen Fahrsituation angepassten optimalen Drehzahl-Drehmomentverhältnisses zwischen der Getriebeingangswelle und der Getriebausgangswelle erreicht werden. Die Zusatzgänge können dabei ausgehend vom Stand der Technik vorteilhaft allein durch eine geänderte Ansteuerung des Getriebes, das heißt durch Änderung der Getriebesoftware erreicht werden, was zu geringen Zusatzkosten bei gleichzeitig großem Nutzen führt.

Das Einstellen der verschiedenen Übersetzungsverhältnisse im Antriebsbereich erfolgt vorteilhaft ohne Zugkraftunterbrechung, insbesondere durch ausschließliche Nutzung von Schaltelementen (Kupplungen und/oder Bremsen) in Lamellenbauart. Alternativ können auch Klauenschaltungen vorgesehen sein.

Zur Einstellung eines der genannten Zwischengänge wird gemäß einer Ausführungsform der Erfindung ein Sonnenrad des Planetensatzes im Abtriebsbereich festgesetzt, beispielsweise mittels einer Bremse in Lamellenbauart, die insbesondere gegen das Getriebegehäuse wirken kann.

Ein Leistungseingang des Planetensatzes zum Anschluss des rein mechanischen Leistungszweigs ist vorteilhaft in Form eines Planetenträgers, auch Steg genannt, vorgesehen. Der Leistungsausgang des Planetensatzes ist gemäß einer Ausführungsform wahlweise in Form desselben Planetenträgers, wenn keine Übersetzung hergestellt werden soll, oder in Form eines Hohlrades vorgesehen, letzteres wenn eine Übersetzung hergestellt werden soll. Entsprechend wird die Getriebeausgangswelle entweder direkt oder mittelbar mit dem Planetenträger oder mit dem Hohlrad in einer Triebverbindung, insbesondere drehfest, verbunden.

Bevorzugt wird bei Verwendung des Planetensatzes als Summiergetriebe das Sonnenrad als Eingang zum Anschluss des hydrodynamischen Leistungszweigs und der Planetenträger zum Anschluss des rein mechanischen Leistungszweigs verwendet, wobei das Hohlrad festgesetzt wird, insbesondere mittels einer Bremse, beispielsweise in Lamellenbauart, vorteilhaft zum Festsetzen des Hohlrades gegenüber dem Getriebegehäuse. Auch hier kann dann die Getriebeausgangswelle direkt oder mittelbar mit dem Planetenträger verbunden werden, der Leistung direkt von dem rein mechanischen Leistungszweig und über wenigstens ein Planetenrad, das mit dem Hohlrad kämmt, vom hydrodynamischen Leistungszweig aufnimmt.

Zum wahlweisen Verbinden des Hohlrades und des Planetenträgers mit der Getriebeausgangswelle kann insbesondere eine Klauenkupplung vorgesehen sein, die synchronisiert oder unsynchronisiert, je nachdem, ob ein Drehzahlausgleich vorgesehen ist, ausgeführt sein kann.

Im Getriebe kann eine elektrische Maschine integriert sein, um einen Hybridantriebsstrang auszubilden, wenn die Getriebeeingangswelle an einem Verbrennungsmotor angeschlossen ist.

Das Pumpenrad des hydrodynamischen Wandlers ist vorteilhaft wahlweise festsetzbar, beispielsweise mittels einer Lamellenbremse, insbesondere gegenüber dem Getriebegehäuse. Das Festsetzen wird dann vorteilhaft in allen rein mechanischen Gängen eingestellt.

Der Rückwärtsgang des Getriebes kann beispielsweise durch alleinige Antriebsleistungsübertragung über den hydrodynamischen Leistungszweig zur Verfügung gestellt werden.

Der Planetensatz im Abtriebsbereich wird auch als Overdrive bezeichnet.

Gemäß einer Ausführungsform der Erfindung ist auch der Planetenträger des Planetensatzes im Abtriebsbereich festsetzbar, insbesondere mittels einer Klauenkupplung gegenüber dem Gehäuse und/oder mittels einer Bremse, die wiederum insbesondere in Lamellenbauart ausgeführt ist.

Gemäß einer Ausführungsform der Erfindung ist im Getriebe ein hydrodynamischer Retarder zusätzlich zu dem hydrodynamischen Wandler vorgesehen, wobei der hydrodynamische Retarder als Primärretarder oder als Sekundärretarder ausgeführt sein kann. Vorteilhaft ist der hydrodynamische Retarder im Abtriebsbereich positioniert, beispielsweise auf der Getriebeausgangswelle hinter dem Planetensatz. Ob dabei der Rotor zwischen dem Planetensatz und dem Stator des Getriebes angeordnet ist oder der Stator zwischen dem Planetensatz und dem Rotor angeordnet ist, ist beliebig.

Die Erfindung soll nachfolgend anhand der Figuren und der Ausführungsbeispiele exemplarisch beschrieben werden.

Es zeigen:
- Figur 1: ein Automatgetriebe, bei dem das erfindungsgemäße Verfahren angewendet werden kann;
- Figuren 2 bis 9: das Schalten verschiedener Gänge in dem Automatgetriebe aus der Figur 1;
- Figur 10: eine abweichende Ausgestaltung mit einem zusätzlichen hydrodynamischen Retarder.

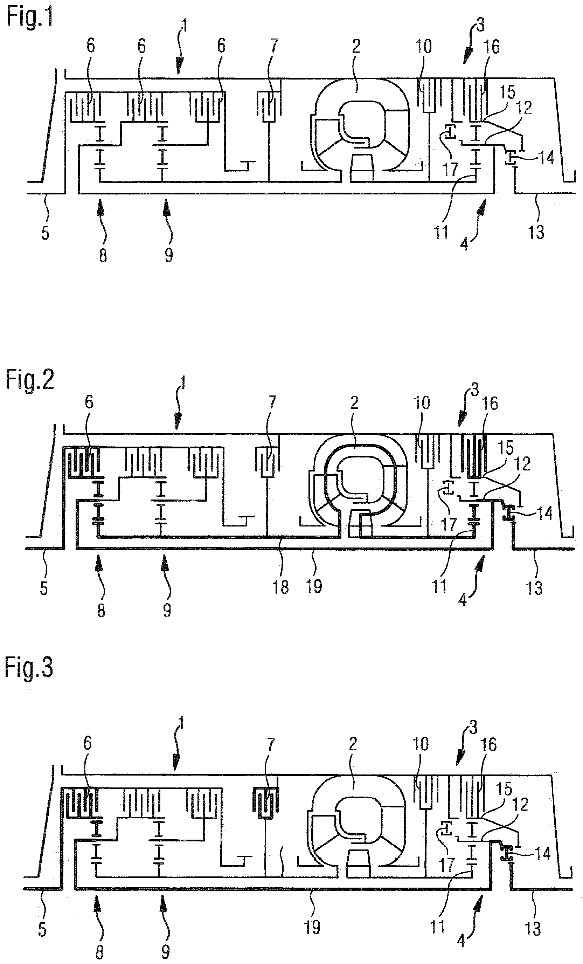

In der Figur 1 ist ein Automatgetriebe mit einem Antriebsbereich 1, einem hydrodynamischen Wandler 2 und einem Abtriebsbereich 3 dargestellt, wobei im Abtriebsbereich 3 genau ein Planetensatz 4 vorgesehen ist. Im Antriebsbereich 1, das heißt ausgehend vom hydrodynamischen Wandler 2 auf der Seite der Getriebeeingangswelle 5 sind verschiedene Bremsen 6 in Lamellenbauart gezeigt, mit welchen die einzelnen Bauteile der beiden miteinander verschalteten Planetensätze 8, 9 des Antriebsbereiches 1 wahlweise festgesetzt werden können. Ferner ist eine sogenannte Pumpenbremse 7 vorgesehen, um das Pumpenrad des hydrodynamischen Wandlers 2 festzusetzen. Somit können im Antriebsbereich 1 verschiedene Übersetzungen eingestellt werden, um verschiedene Gänge des Getriebes auszubilden.

Das Turbinenrad des hydrodynamischen Wandlers 2 ist mittels einer Turbinenbremse 10 festsetzbar, hier ebenfalls in Lamellenbauart. Diese setzt zugleich das Sonnenrad 11 des Planetensatzes 4 im Abtriebsbereich 3 fest.

Der Planetenträger 12 des Planetensatzes 4 ist über die Klauenkupplung 14 mit der Getriebeabtriebswelle 13 verbindbar. Die Getriebeabtriebswelle 13 ist mittels dieser Klauenkupplung 14 ferner mit dem Hohlrad 15 des Planetensatzes 4 verbindbar.

Das Hohlrad 15 des Planetensatzes 4 ist über die Bremse 16 festsetzbar, wiederum gegenüber dem Getriebegehäuse.

Mittels der Klauenkupplung 17 ist der Planetenträger 12 des Planetensatzes 4 im Abtriebsbereich 3 festsetzbar, ebenfalls gegenüber dem Getriebegehäuse.

In der Figur 2 ist die Einstellung des ersten Gangs des Automatgetriebes dargestellt, wobei der erste Gang als kombinierter hydrodynamischer mechanischer Gang ausgeführt ist. Demgemäß wird der Planetensatz 4 als Summiergetriebe verwendet, um die Antriebsleistung aus dem hydrodynamischen Leistungszweig 18 und dem rein mechanischen Leistungszweig 19 zu addieren. Zum Leistungsfluss wird auf den in hervorgehobenen Linien dargestellten Verlauf verwiesen. Eine Bremse 6 im Antriebsbereich 1 ist geschaltet, um das Hohlrad des Planetensatzes 8 mit der Getriebeingangswelle 5 zu verbinden. Das Hohlrad 15 des Planetensatzes 4 im Abtriebsbereich 3 ist mittels der Bremse 16 festgesetzt, der Planetenträger 12 des Planetensatzes 4 im Abtriebsbereich 3 über die Klauenkupplung 14 mit der Getriebeausgangswelle 13 verbunden.

In der Figur 3 ist der Leistungsfluss im zweiten Gang dargestellt, wobei hier eine rein mechanische Leistungsübertragung ausschließlich über den rein mechanischen Leistungszweig 19 erfolgt. Im Planetensatz 4 im Abtriebsbereich 3 erfolgt keine Übersetzung ins Schnelle beziehungsweise überhaupt keine Übersetzung, sodass der Ausgang des rein mechanischen Leistungszweigs 19 mit derselben Drehzahl wie die Getriebeausgangswelle 13 umläuft. Hierzu wird der Planetenträger 12 des Planetensatzes 4 im Abtriebsbereich 3 über die Schaltkupplung 14 an die Getriebeausgangswelle 13 gekoppelt. Die Pumpenbremse 7 ist geschlossen, die Turbinenbremse 10 geöffnet, im Unterschied zur Figur 2, wo für die hydrodynamische Leistungsübertragung beide Bremsen 7, 10 geöffnet sein müssen.

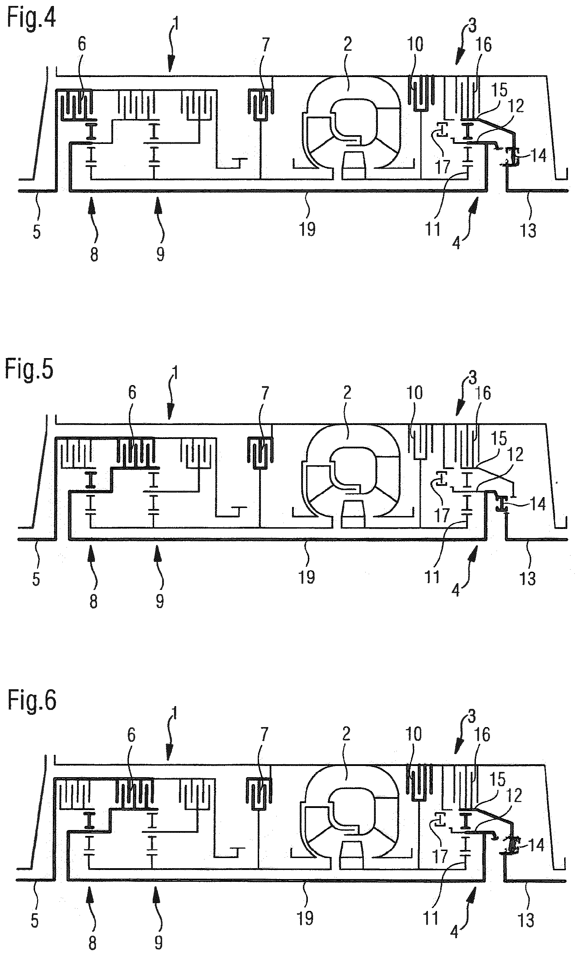

In der Figur 4 ist nun dargestellt, dass zur Schaltung eines zweiten Ganges mit Overdrive auch die Turbinenbremse 10 geschlossen wird und die Getriebeausgangswelle 13 mit dem Hohlrad 15 des Planetensatzes 4 im Abtriebsbereich 3 verbunden wurde, hier über die Klauenkupplung 14. Der rein mechanische Leistungszweig 19 treibt den Planetenträger 12 an, sodass eine Übersetzung ins Schnelle im Planetensatz 4 hergestellt wird. im Übrigen ist die Schaltstellung gemäß der Stellung der Figur 3 unverändert.

Bei der Figur 5 ist im Vergleich zu den Schaltstellungen der Figuren 3 und 4 im Antriebsbereich 1 eine andere Bremse 6 geschlossen, um den dritten Gang einzustellen. Im Einzelnen wird hier der Planetenträger des Planetensatzes 8 mit der Getriebeeingangswelle 5 verbunden. Dadurch wird der dritte Gang eingestellt. Im Übrigen ist die Schaltstellung gegenüber der Figur 3 unverändert.

Bei der Figur 6 wird nun die Schaltstellung aus der Figur 5 wiederum nur durch Verändern des Antriebsleistungsflusses durch den Planetensatz 4 im Abtriebsbereich 3 geändert, analog der Darstellung in der Figur 4, um den dritten Gang mit Overdrive einzustellen.

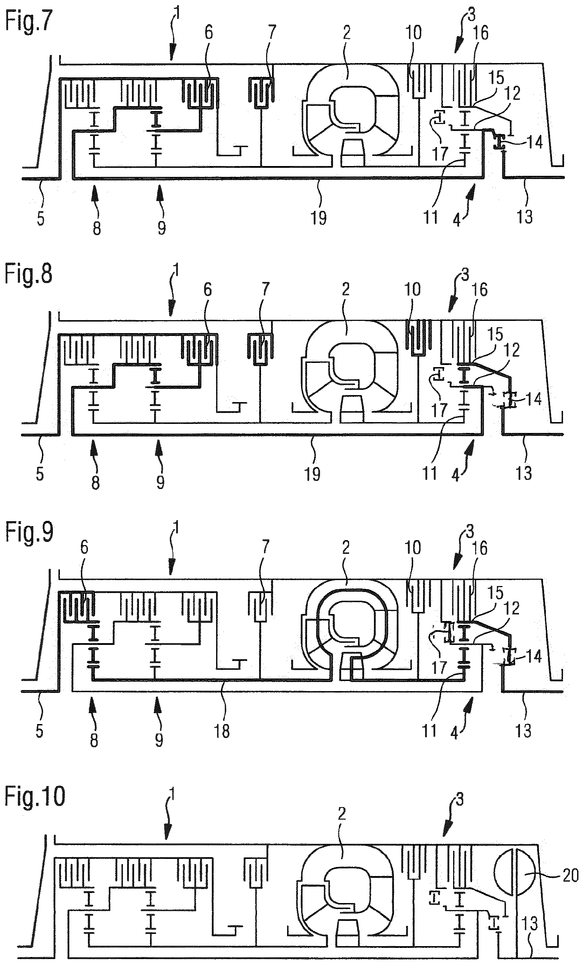

Bei der Figur 7 wird der vierte Gang eingestellt, hier durch Schließen der dritten Bremse 6 im Antriebsbereich 1, wodurch der Planetenträger des Planetensatzes 9 mit der Getriebeeingangswelle 5 verbunden wird. Im Planetensatz 4 im Abtriebsbereich 3 ist keine Übersetzung eingestellt.

Die Figur 8 zeigt wiederum die Verwendung des Overdrives, um einen Zusatzgang einzustellen, den vierten Gang mit Overdrive. Im Übrigen entspricht die Schaltstellung jener der Figur 7.

In der Figur 9 ist die Einstellung des Rückwärtsganges dargestellt, wobei hier Antriebsleistung ausschließlich über den hydrodynamischen Leistungszweig 18 übertragen wird. Getriebeeingangswelle 5 und Getriebeausgangswelle 13 laufen entgegensetzt zueinander um. Prinzipiell könnte das entgegengesetzte Umlaufen auch in den Vorwärtsgängen vorgesehen sein und im Rückwärtsgang ein gleichgerichtetes Umlaufen, je nach Einbau des Getriebes in den verbleibenden Antriebsstrang.

Bei der Ausgestaltung gemäß der Figur 10 ist ergänzend auf der Getriebeausgangswelle 13 ein hydrodynamischer Retarder 20 positioniert. Insbesondere wird der Rotor des hydrodynamischen Retarders 20 unmittelbar von der Getriebeausgangswelle 13 getragen.

## Patentansprüche

1. Verfahren zum Schalten eines Automatgetriebes, das einen Antriebsbereich (1), einen hydrodynamischen Wandler (2) und einen Abtriebsbereich (3) aufweist, wobei im Abtriebsbereich (3) genau ein Planetensatz (4) vorgesehen ist, der einerseits in einem ersten Betriebszustand als Summiergetriebe für eine gleichzeitige parallele Antriebsleistungsübertagung in einem hydrodynamischen Leistungszweig (18) über den hydrodynamischen Wandler (2) und einem rein mechanischen Leistungszweig (19) um den hydrodynamischen Wandler (2) herum wirkt und andererseits in einem zweiten Betriebszustand eine über den rein mechanischen Leistungszweig (19) übertragene Drehbewegung ins Schnelle übersetzt, wobei im rein mechanischen Leistungszweig (19) durch Öffnen und Schließen von Kupplungen und/oder Bremsen (6) im Antriebsbereich (1) verschiedene Übersetzungsverhältnisse eingestellt werden, um verschiedene Gänge des Automatgetriebes zu schalten;
**dadurch gekennzeichnet, dass**
mit dem Planetensatz (4) im Abtriebsbereich (3) bei wenigstens zwei verschiedenen Übersetzungsverhältnissen im rein mechanischen Leistungszweig (19) die über den rein mechanischen Leistungszweig (19) übertragene Drehbewegung zur Einstellung von Zusatzgängen jeweils ins Schnelle übersetzt wird.

2. Verfahren gemäß Anspruch 1, **dadurch gekennzeichnet, dass** mit dem Planetensatz (4) im Abtriebsbereich (3) bei allen verschiedenen Übersetzungsverhältnissen im rein mechanischen Leistungszweig (19) die über den rein mechanischen Leistungszweig (19) übertragene Drehbewegung zur Einstellung von Zusatzgängen jeweils ins Schnelle übersetzt wird.

3. Verfahren gemäß einem der Ansprüche 1 oder 2, **dadurch gekennzeichnet, dass** zur Einstellung eines Zusatzganges ein Sonnenrad (11) des Planetensatzes (4) festgesetzt wird.

4. Verfahren gemäß einem der Ansprüche 1 bis 3, **dadurch gekennzeichnet, dass** im rein mechanischen Leistungszweig (19) im Antriebsbereich (1) wahlweise insbesondere vier verschiedene Übersetzungsverhältnisse zur Einstellung von insbesondere vier mechanischen Gängen eingestellt werden, wobei ein Leistungseingang des Planetensatzes (4), insbesondere in Form eines Planetenträgers (12), drehfest mit einer Getriebeausgangswelle (13) verbunden wird, insbesondere um eine Übersetzung im Planetensatz (4) zu vermeiden.

5. Verfahren gemäß einem der Ansprüche 1 bis 4, **dadurch gekennzeichnet, dass** zur Einstellung der Zusatzgänge ein Leistungsausgang des Planetensatzes (4), insbesondere in Form eines Hohlrades (15) mit einer Getriebeausgangswelle (13) verbunden wird, um die Übersetzung im Planetensatz (4) herzustellen.

6. Verfahren gemäß einem der Ansprüche 4 oder 5, **dadurch gekennzeichnet, dass** zur Einstellung eines Ganges mit Leistungsübertragung über den hydrodynamischen Leistungszweig (18) und gleichzeitig über den rein mechanischen Leistungszweig (19) ein Turbinenrad des hydrodynamischen Wandlers (2) mit einem Sonnenrad (11) des Planetensatzes (4), ein Ausgang des rein mechanischen Leistungszweigs (19) mit dem Planetenträger (12) des Planetensatzes (4) und die Getriebeausgangswelle (13) mit dem Planetenträger (12) des Planetensatzes (4) verbunden wird, wobei das Hohlrad (15) des Planetensatzes (4) festgesetzt wird.

7. Verfahren gemäß einem der Ansprüche 1 bis 6, **dadurch gekennzeichnet, dass** im Antriebsbereich (1) die verschiedenen Übersetzungen des rein mechanischen Leistungszweigs (19) mit miteinander verschalteten Planetensätzen (8, 9) übertragen werden.

8. Verfahren gemäß einem der Ansprüche 1 bis 7, **dadurch gekennzeichnet, dass** die Übersetzungen zwischen einer Getriebeeingangswelle (5) und einer Getriebeausgangswelle (13) in allen Gängen und Zwischengängen frei von einer Überschneidung zueinander geschaltet werden.

## Claims

1. Method for shifting an automatic transmission which has a drive section (1), a hydrodynamic converter (2) and an output section (3), precisely one planetary set (4) being provided in the output section (3), which planetary set (4) firstly acts in a first operating state as a summation gearbox for a simultaneous parallel drive power transmission in a hydrodynamic power branch (18) via the hydrodynamic converter (2) and a purely mechanical power branch (19) around the hydrodynamic converter (2), and secondly, in a second operating state, steps up a rotational movement which is transmitted via the purely mechanical power branch (19), different transmission ratios being set in the purely mechanical power branch (19) by way of opening and closing of clutches and/or brakes (6) in the drive section (1), in order to shift different gears of the automatic transmission; **characterized in that**, in the case of at least two different transmission ratios in the purely mechanical power branch (19), the rotational movement which is transmitted via the purely mechanical power branch (19) is stepped up in each case in order to set additional gears by way of the planetary set (4) in the output section (3).

2. Method according to Claim 1, **characterized in that**, in the case of all the different transmission ratios in the purely mechanical power branch (19), the rotational movement which is transmitted via the purely mechanical power branch (19) is stepped up in each case in order to set additional gears by way of the planetary set (4) in the output section (3).

3. Method according to either of Claims 1 and 2, **characterized in that** a sun gear (11) of the planetary set (4) is locked in order to set an additional gear.

4. Method according to one of Claims 1 to 3, **characterized in that**, in particular, four different transmission ratios are selectively set for setting, in particular, four mechanical gears in the drive section (1) in the purely mechanical power branch (19), a power input of the planetary set (4), in particular in the form of a planetary carrier (12), being connected fixedly to a transmission output shaft (13) so as to rotate with it, in particular in order to avoid a transmission ratio in the planetary set (4).

5. Method according to one of Claims 1 to 4, **characterized in that**, in order to set the additional gears, a power output of the planetary set (4), in particular in the form of an internal gear (15), being connected to a transmission output shaft (13), in order to produce the transmission ratio in the planetary set (4) .

6. Method according to either of Claims 4 and 5, **characterized in that**, in order to set a gear with a power transmission via the hydrodynamic power branch (18) and at the same time via the purely mechanical power branch (19), a turbine wheel of the hydrodynamic converter (2) is connected to a sun gear (11) of the planetary set (4), an output of the purely mechanical power branch (19) is connected to the planetary carrier (12) of the planetary set (4), and the transmission output shaft (13) is connected to the planetary carrier (12) of the planetary set (4), the internal gear (15) of the planetary set (4) being locked.

7. Method according to one of Claims 1 to 6, **characterized in that** the different transmission ratios of the purely mechanical power branch (19) are transmitted in the drive section (1) by way of planetary sets (8, 9) which are connected to one another.

8. Method according to one of Claims 1 to 7, **characterized in that** the transmission ratios between a transmission input shaft (5) and a transmission output shaft (13) are shifted in all gears and intermediate gears in a manner which is free from an overlap with respect to one another.

## Revendications

1. Procédé de changement de rapports d'une boîte de vitesses automatique, qui présente une région d'entraînement (1), un convertisseur hydrodynamique (2) et une région de prise de force (3), un train planétaire (4) étant prévu exactement dans la région de prise de force (3), lequel agit d'une part dans un premier état de fonctionnement en tant que transmission additive pour un transfert de puissance d'entraînement parallèle simultané dans une branche de puissance hydrodynamique (18) par le biais du convertisseur hydrodynamique (2) et dans une branche de puissance purement mécanique (19) autour du convertisseur hydrodynamique (2) et d'autre part, dans un deuxième état de fonctionnement, surmultiplie un mouvement de rotation transmis par le biais de la branche de puissance purement mécanique (19),
différents rapports de démultiplication étant ajustés dans la branche de puissance purement mécanique (19) par ouverture et fermeture d'embrayages et/ou de freins (6) dans la région d'entraînement (1), afin de commuter différents rapports de la boîte de vitesses automatique,
**caractérisé en ce**
**qu'**avec le train planétaire (4), dans la région de prise de force (3), dans le cas d'au moins deux différents rapports de démultiplication dans la branche de puissance purement mécanique (19), le mouvement de rotation transmis par le biais de la branche de puissance purement mécanique (19) est à chaque fois surmultiplié pour l'ajustement de rapports supplémentaires.

2. Procédé selon la revendication 1, **caractérisé en ce qu'**avec le train planétaire (4) dans la région de prise de force (3), dans le cas de tous les différents rapports de démultiplication dans la branche de puissance purement mécanique (19), le mouvement de rotation transmis par le biais de la branche de puissance purement mécanique (19) est à chaque fois surmultiplié pour l'ajustement de rapports supplémentaires.

3. Procédé selon l'une quelconque des revendications 1 et 2, **caractérisé en ce que** pour l'ajustement d'un rapport supplémentaire, une roue solaire (11) du train planétaire (4) est fixée.

4. Procédé selon l'une quelconque des revendications 1 à 3, **caractérisé en ce que** dans la branche de puissance purement mécanique (19) dans la région d'entraînement (1), notamment quatre différents rapports de démultiplication sont ajustés de manière sélective pour l'ajustement de notamment quatre rapports mécaniques, une entrée de puissance du train planétaire (4), en particulier sous la forme d'un porte-satellites (12), étant connectée de manière solidaire en rotation à un arbre de sortie de boîte de vitesses (13), en particulier de manière à éviter une démultiplication dans le train planétaire (4).

5. Procédé selon l'une quelconque des revendications 1 à 4, **caractérisé en ce que** pour l'ajustement des rapports supplémentaires, une sortie de puissance du train planétaire (4), en particulier sous la forme d'une couronne dentée (15), est connectée à un arbre de sortie de boîte de vitesses (13), afin d'établir la démultiplication dans le train planétaire (4).

6. Procédé selon l'une quelconque des revendications 4 et 5, **caractérisé en ce que** pour l'ajustement d'un rapport avec transfert de puissance par le biais de la branche de puissance hydrodynamique (18) et simultanément par le biais de la branche de puissance purement mécanique (19), une roue de turbine du convertisseur hydrodynamique (2) est connectée à une roue solaire (11) du train planétaire (4), une sortie de la branche de puissance purement mécanique (19) est connectée au porte-satellites (12) du train planétaire (4) et l'arbre de sortie de boîte de vitesses (13) est connecté au porte-satellites (12) du train planétaire (4), la couronne dentée (15) du train planétaire (4) étant fixée.

7. Procédé selon l'une quelconque des revendications 1 à 6, **caractérisé en ce que** dans la région d'entraînement (1), les différentes démultiplications de la branche de puissance purement mécanique (19) sont transmises avec des trains planétaires (8, 9) emboîtés l'un dans l'autre.

8. Procédé selon l'une quelconque des revendications 1 à 7, **caractérisé en ce que** les démultiplications entre un arbre d'entrée de boîte de vitesses (5) et un arbre de sortie de boîte de vitesses (13) sont commutées dans tous les rapports et rapports intermédiaires sans recoupements mutuels.
